# EUROPÄISCHE PATENTSCHRIFT

(11) **EP 0 700 815 B1**
(45) Veröffentlichungstag und Bekanntmachung des Hinweises auf die Patenterteilung: **15.11.2000**
(21) Anmeldenummer: 95112940.2
(22) Anmeldetag: 17.08.1995
(51) Int. Cl.: B60T 13/72, B60T 13/52

(54) **Elektronisch regelbarer Bremskraftverstärker mit einer Leitungsdurchführung**
Electronically controlled brake booster with cable lead-through
Amplificateur de force de freinage à commande électronique et à passage de câble

(30) Priorität: 07.09.1994 DE 4431882
(43) Veröffentlichungstag der Anmeldung: 13.03.1996
(73) Patentinhaber: Lucas Industries Limited, London W1Y 4DJ (GB)
(72) Erfinder: Schlüter, Peter, D-56296 Kammerforst (DE)
(74) Vertreter: Schmidt, Steffen J., Dipl.-Ing.

(56) Entgegenhaltungen:
- EP-A- 0 331 084
- EP-A- 0 379 329
- FR-A- 2 625 156
- US-A- 4 944 214

## Beschreibung

Die vorliegende Erfindung betrifft einen elektronisch regelbaren Bremskraftverstärker mit einer Durchführung mit den Merkmalen des Oberbegriffs des Anspruchs 1, wie er aus der US 4,944,214 bekannt ist.

Die in dem elektronisch regelbaren Bremskraftverstärker vorhandenen Betätigungseinrichtungen werden über ein im Motorraum des Fahrzeugs angeordnetes elektronisches Steuergerät mit Strom- bzw. Ansteuersignalen versorgt und in dem Bremskraftverstärker angeordnete Sensoren liefern Signale, die an das elektronische Steuergerät zur weiteren Verarbeitung geleitet werden.

Dies erfordert eine aufwendige Verkabelung zwischen dem elektronischen Steuergerät und den einzelnen Verbrauchern bzw. Signalquellen in dem Bremskraftverstärker. Eine Anordnung der Leitungen außerhalb des Bremskraftverstärkers ist unter anderem deshalb nachteilig, weil die Leitungen dabei relativ stabil und widerstandsfähig ausgestaltet sein müssen.

Andererseits ist eine Durchführung für Leitungen zu einzelnen Verbrauchern oder Quellen durch die verschiedenen Arbeitskammern des Bremskraftverstärkers hindurch schon deshalb nicht realisiert worden, weil die einzelnen Durchtrittsstellen durch die Wände der Arbeitskammern sowohl pneumatisch dicht sein müssen, als auch der Durchtritt durch die bewegliche Wand zwischen den beiden Arbeitskammern relativ problematisch ist, da die Druckverhältnisse zwischen den beiden Arbeitskammern schwanken und die Wand zwischen den beiden Arbeitskammern sich im Betrieb der Fahrzeugbremsanlage bewegt.

Die EP-A-0 331 084 beschreibt einen elektrischen Stecker, der einen fluiddichten Durchgang elektrischer Signale durch eine Trennwand, insbesondere eine Platte eines Getriebes oder anderer mechanischer Fahrzeugbauteile, ermöglicht. Der Stecker weist einen zylindrischen Block auf, der die Trennwand durchsetzt und durch einen Umfangsstopflansch auf einer ihrer Seiten zurückgehalten ist. An der anderen Seite der Trennwand ist mit dem Block durch einen Bajonettverschluß eine Sperrkupplung gekoppelt. Durch den Block sind Leitungen und Kontaktstifte durchgeführt. In der zylindrischen Außenfläche des Blocks ist eine Nut ausgebildet, in der eine O-Ring-Dichtung angeordnet ist. Eine derartig angeordnete O-Ring-Dichtung ist zwar fluiddicht, reicht jedoch nicht aus, um gasdicht, insbesondere bei höheren Drücken, wie es bei Bremskraftverstärkern erforderlich ist, abzudichten.

Der vorliegenden Erfindung liegt daher das Problem zugrunde, eine elektrische Leitung durch die bewegliche Wand zwischen den beiden pneumatischen Arbeitskammern des Bremskraftverstärkers hindurchzuführen, wobei eine einfache Montage und eine hohe Zuverlässigkeit der Anordnung im Betrieb gewährleistet werden soll.

Zur Lösung dieses Problems ist der eingangs beschriebene Bremskraftverstärker durch die Merkmale des Anspruchs 1 weitergebildet.

Durch diese Anordnung wird der unerwartete Effekt erzielt, daß trotz der axialen Bewegung der Wand zwischen den beiden Arbeitskammern ein hermetischer Durchgriff der Leitung von einer Arbeitskammer in die nächste möglich ist, wobei beim Aufbau der Druckdifferenz zwischen den beiden pneumatischen Arbeitskammern keine (Zeit-)Verluste durch neben der Leitungsdurchführung hindurchströmende Luft auftreten.

Unter einer elektrischen Leitung im Sinne der vorliegenden Erfindung ist sowohl ein metallisches Kabel als auch ein Glasfaserkabel zur Übertragung von Signalen zu verstehen.

Da zwischen den beiden pneumatischen Arbeitskammern zumindest im Betrieb eine Druckdifferenz vorhanden ist, bewirkt eine Anordnung der Leitungsdurchführung in der Weise, daß die Halterung sich in der pneumatischen Arbeitekammer mit dem höheren Druckniveau befindet, daß eine besonders betriebssichere Anordnung bereitgestellt wird.

Gemäß einer besonders einfach herstellbaren Ausführungsform ist die Dichtung mit einer mit einem Teil der beweglichen Wand verbundenen Rollmembran einstückig ausgebildet.

Dabei hat vorzugsweise die Dichtung einen Steg mit einer gegenüber der übrigen Rollmembran größeren Materialdicke, um den durch die bewegliche Wand hindurchragenden Abschnitt der Leitungsdurchführung in einer definierten Position zu halten, so daß auch bei Bewegungen der beweglichen Wand durch an der Leitungsdurchführung abgehende Kabel keine nennenswerten seitlichen Zugkräfte hervorgerufen werden können, die zu einem Verrutschen der Leitungsdurchführung in der Dichtung führen und dadurch eine Undichtigkeit der Gesamtanordnung hervorrufen könnten.

Vorzugsweise hat die Dichtung einen die Halterung zumindest teilweise umgebenden Wulst, um die stabile Aufnahme der Leitungsdurchführung noch weiter zu verbessern. Bei einer bevorzugten Ausführungsform bildet der Wulst mit dem Steg eine Stufe, in der die Halterung zumindest teilweise aufgenommen ist.

Um eine möglichst definierte Leitungsführung im Inneren des Bremskraftverstärkers zu erreichen, und um eine möglichst einfache Montage zu ermöglichen, ist die Leitungsdurchführung in der Dichtung vorzugsweise verdrehsicher aufgenommen. Dies kann beispielsweise dadurch erreicht werden, daß der Wulst und/oder der Steg eine Ausnehmung aufweisen, in die ein entsprechend geformter Teil der Leitungsdurchführung eingreift.

Wenn die Dichtung mit ihrem den durch die bewegliche Wand hindurchragenden Abschnitt umgebenden Bereich die Leitungsdurchführung im Schiebesitz umgreift, kann die Leitungsdurchführung in der Dichtung relativ einfach montiert werden. Um besonders definierte Dichtverhältnisse zu haben, ist es vorteilhaft, wenn der den durch die bewegliche Wand hindurchragende Abschnitt umgebende Bereich der Dichtung wenigstens eine Dichtlippe aufweist. Diese kann die Leitungsdurchführung sicher umschließen und so die beiden Arbeitskammern hermetisch voneinander trennen.

Zur Erhöhung der Betriebssicherheit ist es darüber hinaus vorteilhaft, wenn ein Befestigungselement mit dem durch die bewegliche Wand hindurchragenden Abschnitt in Eingriff bringbar ist, so daß die Leitungsdurchführung mit der Dichtung unverlierbar verbunden ist.

Vorzugsweise hat das Befestigungselement und der durch die bewegliche Wand hindurchragende Abschnitt jeweils wenigstens eine Ausnehmung bzw. wenigstens einen in die jeweilige Ausnehmung eingreifenden Vorsprung. Die Ausnehmung und der Vorsprung können dann miteinander verrastbar ausgestaltet sein. Es ist jedoch auch möglich, eine Verschraubung oder eine Bajonett-Verriegelung zwischen den die bewegliche Wand durchragenden Abschnitt und dem Befestigungselment zu versehen. Bei einer bevorzugten Ausführungsform preßt das Befestigungselement die Dichtung in seiner montierten Stellung - die Ausnehmung bzw. der Vorsprung sind miteinander verrastet - gegen die Halterung.

Vorzugsweise sind der durch die bewegliche Wand hindurchragende Abschnitt und/oder die Halterung hülsenförmig, insbesondere im wesentlichen zylindrisch gestaltet. Damit wird eine besonders dichte Anordnung erreicht.

Die Leitungsdurchführung weist wenigstens einen Anschlußstift auf, dessen beide Enden eine in der Leitungsdurchführung angeordnete Trennwand überragen. Vorzugsweise ist wenigstens ein Ende des Anschlußstifte gegenüber einer Stirnseite des durch die bewegliche Wand hindurchragenden Abschnitts bzw. der Halterung zurückversetzt. Die Enden des Anschlußstiftes sind mit einem Anschlußkabel elektrisch verbunden. Falls die Leitung als Glasfaserleitung ausgestaltet ist, kann hier auch eine entsprechende Leitungskupplung vorgesehen sein.

Der Anschlußstift (ggf. zusammen mit dem damit elektrisch verbundenen Anschlußkabel) ist vorzugsweise mit einem hermetisch aushärtenden Metall umgeben.

Die elektrische Verbindung von der ersten Arbeitskammer zu der zweiten Arbeitskammer zwischen einem Ende des Anschlußstifts und dem Anschlußkabel kann durch Löten, Crimpen, Quetschen oder durch eine Steckverbindung hergestellt sein.

Weitere Vorteile und Ausgestaltungen werden anhand der nachstehenden Figurenbeschreibung unter Bezugnahme auf die beigefügten Zeichnungen erläutert, in denen:
- Fig. 1: einen Längsschnitt eines Bremskraftverstärkers in einer Teilansicht zeigt;
- Fig. 2: eine Draufsicht auf eine in Fig. 1 dargestellte bewegliche Wand in einem kleineren Maßstab zeigt; und
- Fig. 3: eine in einer mit der beweglichen Wand verbundenen Rollmembran ausgebildete Dichtung in einer vergrößerten Schnittdarstellung zeigt.

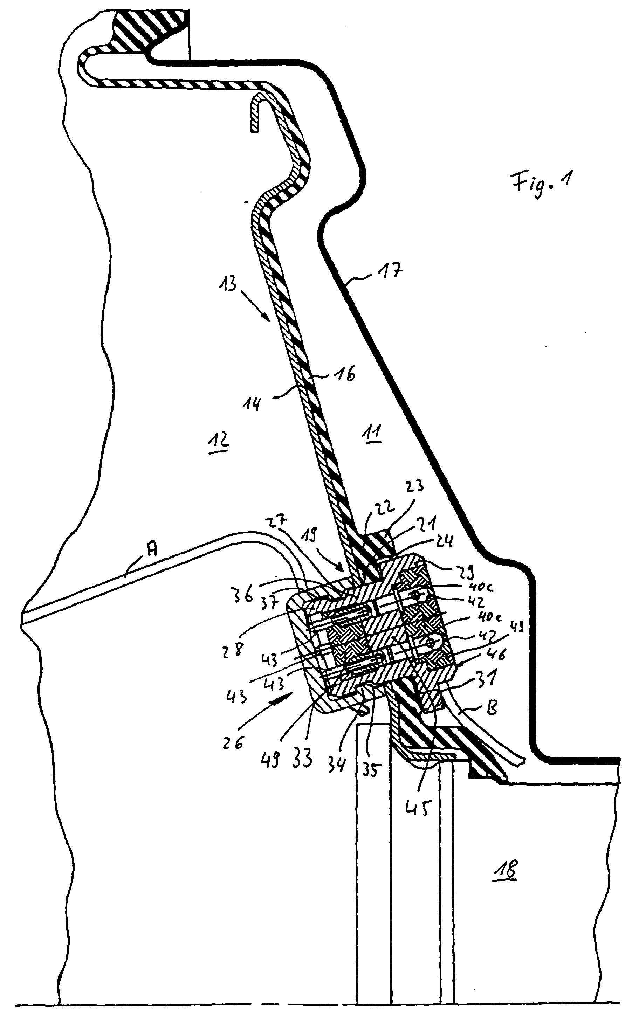

In Fig. 1 ist ein Teil eines elektronisch regelbaren Bremskraftverstärkers gezeigt, der eine erste pneumatische Arbeitskammer 11 und eine zweite pneumatische Arbeitskammer 12 aufweist, die voneinander durch eine bewegliche Wand 13 getrennt sind. Die bewegliche Wand weist ein starres Teil 14 in Gestalt eines kreisrunden kraftübertragenden Membrantellers auf, der mit einer aus einem gummiähnlichen Material bestehenden Rollmembran 16 verbunden ist. Die Rollmembran 16 überragt den Membranteller entlang dessen Umfangs in radialer Richtung und ist mit einer nur teilweise veranschaulichten Gehäuseschale 17 hermetisch verbunden. In der Mitte des Membrantellers 14 und der Rollmembran 16 sind die beiden Teile mit einem Steuergehäuse 18 einer - nicht weiter veranschaulichten - Steuerventilanordnung verbunden.

In radialer Richtung nahe bei dem Steuergehäuse 18 weist der Membranteller 14 eine kreisrunde Öffnung 19 auf, die mit einer Öffnung 21 mit im wesentlichen gleichen Durchmessern fluchtet. In dem die Öffnung 21 umgebenden Bereich ist die Rollmembran 16 mit einem Steg 22 versehen, der eine gegenüber der übrigen Rollmembran 16 etwa verdoppelte Materialdicke aufweist, wodurch eine Dichtung 22 gebildet ist. Auf der dem Membranteller 14 abgewandten Seite der Dichtung weist diese einen Wulst 23 auf, der einen gegenüber der Öffnung 21 vergrößerten Innendurchmesser hat, so daß der Steg 22 zusammen mit dem Wulst 23 eine Stufe 24 bildet.

Eine allgemein mit 26 bezeichnete Leitungsdurchführung hat eine im wesentlichen zylindrische Querschnittsgestalt und weist einen durch die bewegliche Wand 14 im Bereich der Öffnung 19 sowie durch den Steg 22 der Dichtung im Bereich der Öffnung 21 hindurchragenden Abschnitt 27 auf, dessen freies Ende 28 in die zweite pneumatische Arbeitskammer 12 ragt. Am gegenüberliegenden Ende des Abschnitts 27 weist die Leitungsdurchführung 26 eine Halterung 29 auf, die einstückig an den Abschnitt 27 angeformt ist, und gegenüber diesem einen vergrößerten Durchmesser aufweist, der so bemessen ist, daß die Halterung 29 in der Stufe 24 aufgenommen ist.

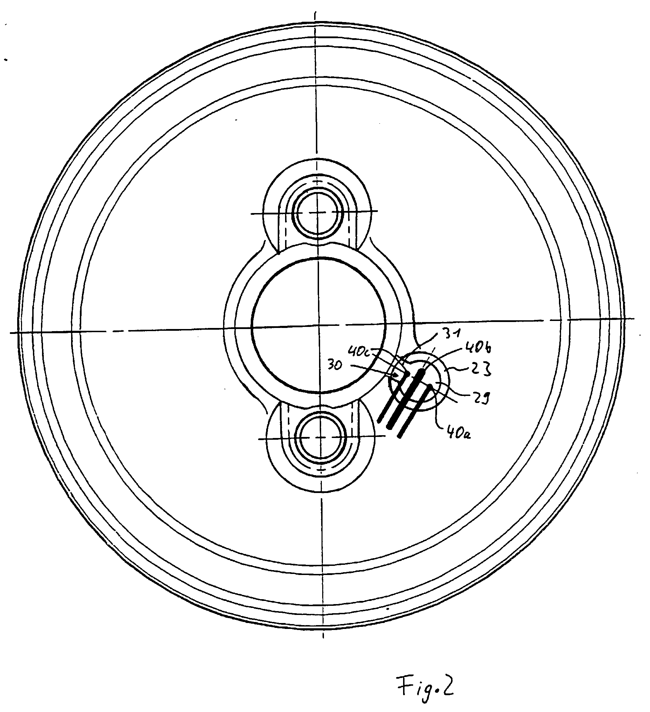

Damit die Leitungsdurchführung 26 in der Dichtung 22 verdrehsicher aufgenommen ist, weist der Wulst 23 eine radiale Ausnehmung auf, in die ein an der Halterung angeformter radialer Fortsatz 31 formschlüssig eingreift (siehe dazu Fig. 2).

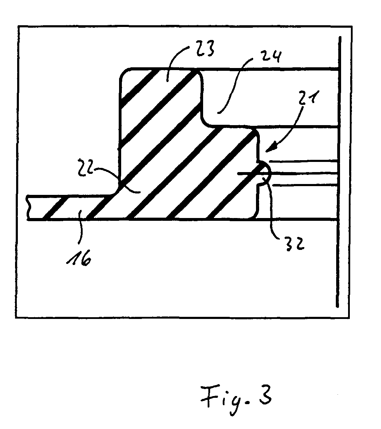

Die Leitungsdurchführung 26 ist mit ihrem durch die bewegliche Wand 14 hindurchragenden Abschnitt 27 im Bereich der Öffnung 21, die den Abschnitt 27 umgibt, in Schiebesitz aufgenommen. Dazu hat die Dichtung 22 im Bereich der Öffnung 21, der dem Abschnitt 27 zugewandt ist, eine umlaufende Dichtlippe 32 (siehe Fig. 3).

Die Leitungsdurchführung 26 weist an ihrem in die zweite pneumatische Arbeitskammer 12 ragenden Ende 28 ein Befestigungselement in Form einer Kappe 33 mit einem im Längsschnitt im wesentlichen U-förmigen Profil auf. An der Innenseite der zylindrischen Kappe 33 befindet sich ein umlaufender als Rast wirkender Vorsprung 34, der in eine an der Außenseite des zylinderförmigen Abschnitts 27 ausgeformte Ausnehmung 35 eingreift. Dabei ist der Vorsprung 34 mit einer schrägverlaufenden Auflauframpe 36 versehen und einer rechtwinklig zur Innenwand verlaufenden Kante 37. Das freie Ende 28 des Abschnitts 27 der Leitungsdurchführung 26 ist an seiner Außenseite angeschrägt, so daß die Kappe 35 über den Abschnitt 27 gegen den Membranteller 14 geschoben werden kann, so daß die Ausnehmung 35 und der Vorsprung 34 miteinander verrasten können. Dabei sind die Abmessungen der Ausnehmung 35 und des Vorsprungs 34 sowie der Kappe 33 und der Längserstreckung des Abschnitts 27 gegenüber der Halterung 29 und die Materialdicke des Steges 22 so bemessen, daß bei einer Ausführungsform die Leitungsdurchführung 26 mit geringem axialen Spiel - durch die Kappe 33 und die Halterung 29 begrenzt - in der Öffnung 19 bzw. 21 aufgenommen ist, während bei einer zweiten Ausführungsform des Befestigungselements 33 die Dichtung 22 gegen die Halterung 29 preßt.

Die Leitungsdurchführung 26 weist im gezeigten Ausführungsbeispiel (siehe Fig. 2) drei Anschlußstifte 40a, 40b, 40c auf, deren jeweilige beide Enden 42, 43 eine in der Leitungsdurchführung angeordnete Trennwand 45 überragen. Die Anschlußstifte 40a, 40b, 40c sind in der Trennwand hermetisch angeordnet und an dem in der Halterung 29 befindlichen Ende 42 der Anschlußstifte 40a, 40b, 40c sind diese gegenüber der Stirnseite der Halterung 29 zurückversetzt. An dem gegenüberliegenden Ende reichen die Enden 43 der Anschlußstifte 40a, 40b, 40c praktisch bis zu der Stirnseite des Endes 28 des Abschnitts 27.

An den jeweiligen beiden Enden 42, 43 ist jeder Anschlußstift 40a, 40b, 40c mit einer Ader eines Kabels A, B durch Löten, Crimpen, Quetschen oder eine Steckverbindung verbunden, so daß eine elektrische Verbindung von der ersten Arbeitskammer zu der zweiten Arbeitskammer durch die Leitungsdurchführung hergestellt ist.

Die jeweilige elektrische Verbindung von den Adern der Anschlußkabel A, B mit den Enden der Anschlußstifte 40a, 40b, 40c ist mit einem hermetisch aushärtenden (Kunstharz-)Material umgeben, wodurch die Abdichtung noch weiter verbessert ist.

Ein wesentlicher Vorteil der Erfindung besteht darin, daß die Dichtung ein Teil der beweglichen Wand, insbesondere ein Teil der Rollmembran sein kann. Das heißt, daß durch die besondere Gestaltung der Rollmembran im Bereich der Leitungsdurchführung mehrere Funktionen miteinander integriert sind. Dies erlaubt eine besonders einfache und kostengünstige Montage.

## Patentansprüche

1. Elektronisch regelbarer Bremskraftverstärker mit einer Durchführung, der
- eine erste pneumatische Arbeitskammer (11),
- eine zweite pneumatische Arbeitskammer (12), die voneinander durch eine bewegliche Wand (13) getrennt sind,
- eine die bewegliche Wand (13) durchdringende Durchführung (26) mit
= einem durch die bewegliche Wand (13) hindurchragenden Abschnitt (27) und
= einer Halterung (29), die die Beweglichkeit der Durchführung (26) zumindest in deren Längsrichtung begrenzt, und
- eine die Durchführung (26) im Bereich der beweglichen Wand (13) umgebende Dichtung (22) aufweist, wobei
- die Dichtung (22) den durch die bewegliche Wand hindurchragenden Abschnitt (27) der Durchführung (26) fest umgreift und/oder die Dichtung (22) an der Halterung (29) anliegt, dadurch gekennzeichnet, daß
- die Durchführung eine Leitungsdurchführung (26) für wenigstens eine elektrische Leitung (A, B) ist.

2. Bremskraftverstärker nach Anspruch 1, bei dem die Dichtung (22) mit einer mit einem starren Teil (14) der beweglichen Wand (13) verbundenen Rollmembran (16) einstückig ausgebildet ist.

3. Bremskraftverstärker nach Anspruch 2, bei dem die Dichtung (22) einen Steg mit einer gegenüber der übrigen Rollmembran (16) größeren Materialdicke aufweist.

4. Bremskraftverstärker nach einem der Ansprüche 1 bis 3, bei dem die Dichtung (22) einen die Halterung (29) zumindest teilweise umgebenden Wulst (23) aufweist.

5. Bremskraftverstärker nach Anspruch 4, bei dem der Wulst (23) mit dem Steg (22) eine Stufe (24) bildet, in der die Halterung (29) zumindest teilweise aufgenommen ist.

6. Bremskraftverstärker nach einem der Ansprüche 2 bis 5, bei dem die Leitungsdurchführung (26) in der Dichtung (22) verdrehsicher aufgenommen ist.

7. Bremskraftverstärker nach Anspruch 6, soweit dieser auf Anspruch 5 zurückbezogen ist, bei dem der Wulst (23) und/oder der Steg (23) eine Ausnehmung (30) aufweisen, in die ein entsprechend geformter Teil (31) der Leitungsdurchführung (26) eingreift.

8. Bremskraftverstärker nach einem der Ansprüche 2 bis 7, bei dem die Dichtung (22) mit ihrem den durch die bewegliche Wand (13) hindurchragenden Abschnitt (27) umgebenden Bereich (21) die Leitungsdurchführung (26) im Schiebesitz umgreift.

9. Bremskraftverstärker nach dem vorhergehenden Anspruch, bei dem der den durch die bewegliche Wand (13) hindurchragende Abschnitt (27) umgebende Bereich (21) der Dichtung (22) wenigstens eine Dichtlippe (32) aufweist.

10. Bremskraftverstärker nach einem der Ansprüche 2 bis 9, bei dem ein Befestigungselement (33) mit dem durch die bewegliche Wand (13) hindurchragenden Abschnitt (27) in Eingriff bringbar ist, das die Leitungsdurchführung (26) mit der Dichtung (22) unverlierbar verbindet.

11. Bremskraftverstärker nach dem vorhergehenden Anspruch, bei dem das Befestigungselement (33) und der durch die bewegliche Wand (13) hindurchragende Abschnitt (27) jeweils wenigstens eine Ausnehmung (35) bzw. wenigstens einen in die jeweilige Ausnehmung (35) eingreifenden Vorsprung (34) aufweisen.

12. Bremskraftverstärker nach einem der Ansprüche 10 bis 11, bei dem das Befestigungselement (33) den durch die bewegliche Wand (13) hindurchragenden Abschnitt (27) umgibt und die Ausnehmung (35) bzw. der Vorsprung (34) miteinander verrastbar sind.

13. Bremskraftverstärker nach einem der Ansprüche 10 bis 12, bei dem das Befestigungselement (33) die Dichtung (22) gegen die Halterung (29) preßt.

14. Bremskraftverstärker nach einem der Ansprüche 2 bis 13, bei dem der durch die bewegliche Wand (13) hindurchragende Abschnitt (27) und/oder die Halterung (29) hülsenförmig, vorzugsweise im wesentlichen zylindrisch gestaltet sind.

15. Bremskraftverstärker nach einem der Ansprüche 2 bis 14, bei dem die Leitungsdurchführung (26) wenigstens einen Anschlußstift (40a, 40b, 40c) aufweist, dessen beiden Enden (42, 43) eine in der Leitungsdurchführung (26) angeordnete Trennwand (45) überragen.

16. Bremskraftverstärker nach dem vorhergehenden Anspruch, bei dem wenigstens ein Ende (42) des Anschlußstiftes (42a, 42b, 42c) gegenüber einer Stirnseite des durch die bewegliche Wand (13) hindurchragenden Abschnitts (27) bzw. der Halterung (29) zurückversetzt ist.

17. Bremskraftverstärker nach einem der Ansprüche 15 bis 16, bei dem wenigstens ein Ende (42, 43) des Anschlußstiftes (40a, 40b, 40c) mit einem Anschlußkabel (A, B) elektrisch verbunden ist.

18. Bremskraftverstärker nach einem der Ansprüche 15 bis 17, bei dem wenigstens ein Ende (42, 43) des Anschlußstiftes (40a, 40b, 40c) mit einem hermetisch aushärtenden Material (40) umgeben ist.

19. Bremskraftverstärker nach dem vorhergehenden Anspruch, bei dem die elektrische Verbindung von der ersten Arbeitekammer (11) zu der zweiten Arbeitskammer (12) zwischen einem Ende (42, 43) des Anschlußstiftes (40a, 40b, 40c) und dem Anschlußkabel (A, B) durch Löten, Crimpen, Quetschen oder durch eine Steckverbindung hergestellt ist.

## Claims

1. An electronically controllable brake booster with a feed-through, comprising
- a first pneumatic working chamber (11),
- a second pneumatic working chamber (12 which are separated from each other by a movable wall (13),
- a feed-through (26) penetrating the movable wall (13), having
= a portion (27) penetrating the movable wall (13), and
= a holder (29) limiting the movability of the feed-through (26) at least in its longitudinal direction, and
- having a seal (22) surrounding the feed-through (26) in the area of the movable wall (13), wherein
- the seal (22) tightly surrounds the portion (27) of the feed-through (26) which penetrates the movable wall and/or the seal (22) abuts the holder (29), characterised in that
- the feed-through is a cable feed-through (26) for at least one electric cable (A, B).

2. The brake booster according to claim 1, where the seal (22) is formed integrally with a rolling diaphragm (16) connected with a rigid part (14) of the movable wall (13).

3. The brake booster according to claim 2, where the seal (22) comprises a web with a grater material thickness than the remaining rolling diaphragm (16).

4. The brake booster according to one of claims 1 to 3, where the seal (22) comprises a bead (23) which at least partially surrounds the holder (29).

5. The brake booster according to claim 4, where the bead (23) together with the web (22) forms a step (24) which at least partially accommodates the holder (29).

6. The brake booster according to one of claims 2 to 5, where the cable feed-through (26) is received in the seal (22) in a locked rotation-preventing position.

7. The brake booster according to claim 6, as far it refers to claim 5, where the bead (23) and/or the web (22) comprise/s a recess (30) into which a correspondingly shaped part (31) of the cable feed-through (26) engages.

8. The brake booster according to one of claims 2 to 7, where the seal (22) with its area (21) surrounding the portion (27) penetrating the movable wall (13) surrounds the cable feed-through (26) in a sliding fit.

9. The brake booster according to the previous claim, where the area (21) of the seal (22) surrounding the portion (27) penetrating the movable wall (13) comprises at least one sealing lip (32).

10. The brake booster according to one of claims 2 to 9, where a fastening element (33) can be brought in engagement with the portion (27) penetrating the movable wall (13), which captively connects the cable feed-through (26) with the seal (22).

11. The brake booster according to the previous claim, where the fastening element (33) and the portion (27) penetrating the movable wall (13) each comprise at least one recess (35) or at least one projection (34), respectively, engaging the respective recess (35).

12. The brake booster according to one of claims 10 to 11, where the fastening element (33) surrounds the portion (27) penetrating the movable wall (13) and the recess (35) and the projection (34), respectively, can be interlocked.

13. The brake booster according to one of claims 10 to 12, where the fastening element (33) forces the seal (22) against the holder (29).

14. The brake booster according to one of claims 2 to 13, where the portion (27) penetrating the movable wall (13) and/or the holder (29) is/are designed sleeve-shaped, preferably essentially cylindrical.

15. The brake booster according to one of claims 2 to 14, where the cable feed-through (26) comprises at least one connecting pin (40a, 40b, 40c) the two ends (42, 43) of which project beyond a partition (45) arranged in the cable feed-through (26).

16. The brake booster according to the previous claim, where at least one end (42) of the connecting pin (42a, 42b, 42c) is offset backward relative to a face of the portion (27) penetrating the movable wall (13) or the holder (29), respectively.

17. The brake booster according to one of claims 15 to 16, where at least one end (42, 43) of the connecting pin (40a, 40b, 40c) is electrically connected with a connecting cable (A, B).

18. The brake booster according to one of claims 15 to 17, where at least one end (42, 43) of the connecting pin (40a, 40b, 40c) is embedded in a hermetically curing material (40).

19. The brake booster according to the previous claim, where the electrical connection from the first working chamber (11) to the second working chamber (12) is made between one end (42, 43) of the connecting pin (40a, 40b, 40c) and the connecting cable (A, B) by soldering, crimping, squeezing, or a plug-in connection.

## Revendications

1. Servofrein pouvant être réglé électroniquement comprenant un passage, présentant
- une première chambre de travail pneumatique (11),
- une deuxième chambre de travail pneumatique (12) qui sont séparées l'une de l'autre par une paroi mobile (13),
- un passage (26) traversant la paroi mobile (13) comprenant
= une portion (27) traversant la paroi mobile (13) et
= une fixation (29) qui limite la mobilité du passage (26) au moins dans la direction longitudinale de celui-ci, et
- une garniture d'étanchéité (22) entourant le passage (26) dans la zone de la paroi mobile (13),
- la garniture d'étanchéité (22) enserrant la portion (27) du passage (26) traversant la paroi mobile (13) et / ou la garniture d'étanchéité (22) s'applique contre la fixation (29),
caractérisé en ce que
- le passage est un passage de câble (26) pour au moins un câble électrique (A, B).

2. Servofrein selon la revendication 1, dans lequel la garniture d'étanchéité (22) est formée d'une seule pièce avec une membrane pouvant rouler sur elle-même (16) reliée à une partie rigide (14) de la paroi mobile (13).

3. Servofrein selon la revendication 2, dans lequel la garniture d'étanchéité (22) présente une âme ayant une épaisseur de matière plus importante que le reste de la membrane pouvant rouler sur elle-même (16).

4. Servofrein selon l'une quelconque des revendications 1 à 3, dans lequel la garniture d'étanchéité (22) présente un bourrelet (23) entourant au moins partiellement la fixation (29).

5. Servofrein selon la revendication 4, dans lequel le bourrelet (23) forme avec l'âme (22) un gradin (24) dans lequel la fixation (29) est reçue au moins partiellement.

6. Servofrein selon l'une quelconque des revendications 2 à 5, dans lequel dans lequel le passage de câble (26) est reçu fixe en rotation dans la garniture d'étanchéité (22).

7. Servofrein selon la revendication 6, dans la mesure où celle-ci dépend de la revendication 5, dans lequel le bourrelet (23) et / ou l'âme (23) présentent un creux (30) dans lequel pénètre une partie (31) formée en conséquence du passage de câble (26).

8. Servofrein selon l'une quelconque des revendications 2 à 7, dans lequel la garniture d'étanchéité (22) enveloppe, par sa zone (21) entourant la portion (27) traversant la paroi mobile (13), le passage de câble (26) en formant un siège coulissant.

9. Servofrein selon la revendication précédente, dans lequel la zone (21) de la garniture d'étanchéité (22) entourant la portion (27) traversant la paroi mobile (13) présente au moins une lèvre d'étanchéité (32).

10. Servofrein selon l'une quelconque des revendications 2 à 9, dans lequel un élément de fixation (33), qui peut être mis en liaison mécanique avec la portion (27) traversant la paroi mobile (13), relie le passage de câble (26) à la garniture d'étanchéité (22).

11. Servofrein selon la revendication précédente, dans lequel l'élément de fixation (33) et la portion (27) traversant la paroi mobile (13) présentent chacun au moins un creux (35) respectivement une partie en saillie (34) pénétrant dans le creux (35) respectif.

12. Servofrein selon l'une quelconque des revendications 10 à 11, dans lequel l'élément de fixation (33) entoure la portion (27) traversant la paroi mobile (13) et le creux (35) respectivement la partie en saillie (34) peuvent s'enclencher l'une dans l'autre.

13. Servofrein selon l'une quelconque des revendications 10 à 12, dans lequel l'élément de fixation (33) presse la garniture d'étanchéité (22) contre la fixation (29).

14. Servofrein selon l'une quelconque des revendications 2 à 13, dans lequel la portion (27) traversant la paroi mobile (13) et / ou la fixation (29) sont en forme de manchon, de préférence principalement de forme cylindrique.

15. Servofrein selon l'une quelconque des revendications 2 à 14, dans lequel le passage de câble (26) présente au moins une broche de raccordement (40a, 40b, 40c) dont les deux extrémités (42, 43) dépassent d'une paroi de séparation (45) disposée dans le passage de câble (26).

16. Servofrein selon la revendication précédente, dans lequel au moins une (42) des extrémités de la broche de raccordement (42a, 42b, 42c) est en retrait par rapport à une face frontale de la portion (27) traversant la paroi mobile (13), respectivement de la fixation (29).

17. Servofrein selon l'une quelconque des revendications 15 à 16, dans lequel au moins une extrémité (42, 43) de la broche de raccordement (40a, 40b, 40c) est reliée électriquement à un câble de raccordement (A, B).

18. Servofrein selon l'une quelconque des revendications 15 à 17, dans lequel au moins une extrémité (42, 43) de la broche de raccordement (40a, 40b, 40c) est entourée d'un matériau (40) durcissant hermétiquement.

19. Servofrein selon la revendication précédente, dans lequel la liaison électrique de la première chambre de travail (11) à la deuxième chambre de travail (12) est réalisée entre une extrémité (42, 43) de la broche de raccordement (40a, 40b, 40c) et le câble de raccordement (A, B) par brasage, sertissage, serrage ou par un raccord à fiche.
